**Europäisches Patentamt**

**European Patent Office**

**Office européen des brevets**

(19)

(11) Veröffentlichungsnummer : **0 365 808 B1**

(12) **EUROPÄISCHE PATENTSCHRIFT**

(45) Veröffentlichungstag der Patentschrift :
**28.10.92 Patentblatt 92/44**

(51) Int. Cl.$^5$ : **B62D 25/00**

(21) Anmeldenummer : **89116816.3**

(22) Anmeldetag : **12.09.89**

(54) **Wasserdichter Verschluss für eine nur von einer Seite her zugängliche Bohrung bzw. Öffnung in einer Wand geringer Dicke.**

(30) Priorität : **22.10.88 DE 3836018**

(43) Veröffentlichungstag der Anmeldung :
**02.05.90 Patentblatt 90/18**

(45) Bekanntmachung des Hinweises auf die
Patenterteilung :
**28.10.92 Patentblatt 92/44**

(84) Benannte Vertragsstaaten :
**AT CH DE FR IT LI NL**

(56) Entgegenhaltungen :
**DE-A- 946 592**
**DE-A- 3 338 871**
**DE-U- 8 802 422**
**FR-A- 650 921**

(73) Patentinhaber : **MAN Nutzfahrzeuge
Aktiengesellschaft
Dachauer Strasse 667 Postfach 50 06 20
W-8000 München 50 (DE)**

(72) Erfinder : **Eisermann, Günther, Dipl.-Ing.
Würmstrasse 1c
W-8047 Karlsfeld (DE)**
Erfinder : **Fink, Johannes, Dipl.-Ing.
Salzburger Strasse 14
W-8060 Dachau (DE)**

EP 0 365 808 B1

**Beschreibung**

Die Erfindung betrifft einen von Hand montier- und demontierbaren, wasserdichten Verschluß für eine nur von einer Seite her zugängliche Bohrung bzw. Öffnung in einer Wand, insbesondere Karosserieteil, geringer Dicke.

Als Fallbeispiel für eine solche zu verschließende Öffnung sei jene Bohrung zur Durchführung einer Antenne in der Karosserie eines Kraftfahrzeuges angenommen. Es erweist sich im Zusammenhang mit solchen Bohrungen als zweckmäßig, diese bereits bei der Herstellung des Fahrzeugs vorzusehen, damit beim späteren Einbau eines Radios in das Fahrzeug das zeitraubende Nachbohren dieses zur Durchführung und Befestigung der Antenne notwendigen Loches vermeidbar ist. Um Korrosionsschäden zu verhindern, muß das unbenutzte Loch durch einen entsprechenden Verschluß abgedeckt werden. Dieser soll auch ästetischen Gesichtspunkten Rechnung tragen, sowie einfach von Hand montierbar und demontierbar sein. Da es sich bei diesem Verschluß um ein an sich am Fahrzeug nicht notwendiges Bauteil handelt, soll er in der Herstellung auch besonders kostengünstig sein.

Es ist daher Aufgabe der Erfindung, einen kostengünstig herstellbaren und einfach von Hand montier- und demontierbaren, wasserdichten Verschluß für eine nur von einer Seite her zugängliche Bohrung bzw. Öffnung in einer Wand, insbesondere Karosserieteil, geringer Dicke zu schaffen.

Diese Aufgabe wird erfindungsgemäß durch einen vierteiligen Verschlußstopfen mit Einzelmerkmalen der im Kennzeichen des Anspruchs 1 angegebenen Art gelöst.

Obschon der erfindungsgemäße Verschlußstopfen aus vier Teilen besteht, ist er insgesamt gesehen verhältnismäßig billig zu realisieren, denn jedes seiner Einzelteile ist auf kostengünstigste Weise herstellbar. Aufgrund der erfindungsgemäßen Ausgestaltung sind die Teile des Verschlußstopfens auch leicht miteinander verbindbar und sicher in gegenseitiger Zuordnung zueinander gehalten. Außerdem ist der Verschlußstopfen in vormontierter Zusammenstellung seiner Einzelteile mit einem einzigen Handgriff durch die zu verschließende Öffnung hindurch in Verschlußstellung zu bringen. Anschließend ist lediglich noch die Spannschraube anzuziehen, um den Verschlußstopfen in endgültige lagesichere Einbauposition zu bringen.

Vorteilhafte Ausgestaltungen und Einzelheiten der Erfindung sind in den Unteransprüchen angegeben.

Nachstehend ist ein Ausführungsbeispiel des erfindungsgemäßen Verschlusses anhand der Zeichnung näher erläutert. In der Zeichnung zeigen:

Fig. 1 die Abdeckplatte des erfindungsgemäßen Verschlußstopfens im Schnitt entlang der in Fig. 2 eingetragenen Schnittlinie I-I,

Fig. 2 die Abdeckplatte gemäß Fig. 1 in Draufsicht,

Fig. 3 die Abdeckplatte gemäß Fig. 1 zur einen Hälfte in Seitenansicht, zur anderen Hälfte im Schnitt gemäß der Schnittlinie III-III von Fig. 2,

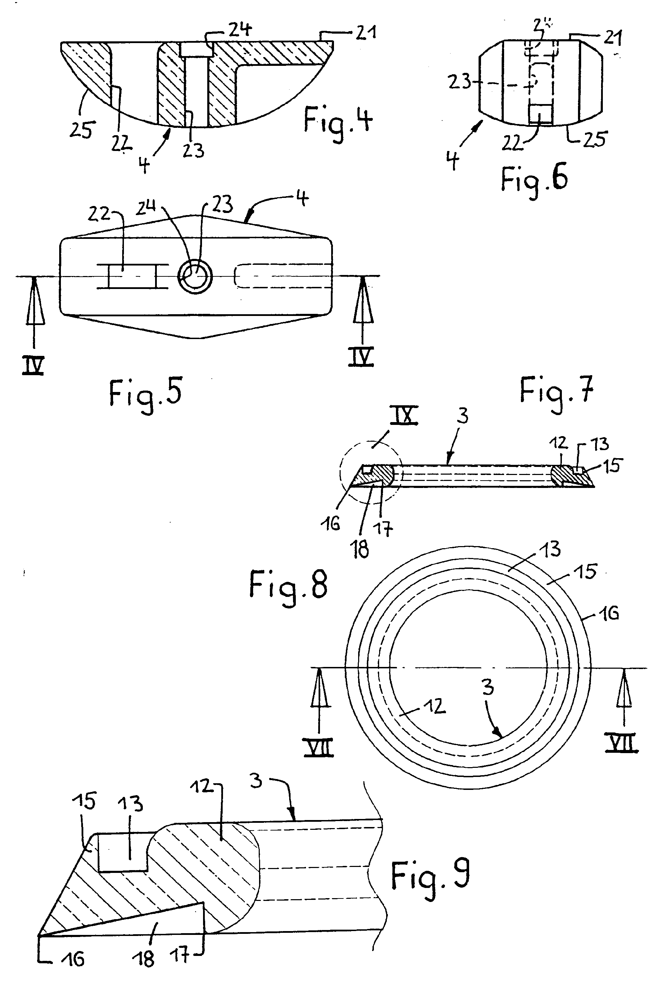

Fig. 4 den Konterbügel des erfindungsgemäßen Verschlußstopfens im Schnitt gemäß der Schnittlinie IV-IV von Fig. 5,

Fig. 5 den Konterbügel gemäß Fig. 4 in Draufsicht,

Fig. 6 den Konterbügel gemäß Fig. 4 in Seitenansicht,

Fig. 7 den Dichtungsring des erfindungsgemäßen Verschlußstopfens im Schnitt gemäß Schnittlinie VII-VII aus Fig. 8,

Fig. 8 den Dichtungsring gemäß Fig. 7 in Draufsicht,

Fig. 9 den Ausschnitt IX des Dichtungsringes gemäß Fig. 7 vergrößert,

Fig. 10 den erfindungsgemäßen Verschlußstopfen in vormontierter Zusammenstellung seiner Teile,

Fig. 11 ein Stadium der Anbringung des erfindungsgemäßen Verschlußstopfens im Bereich einer zu verschließenden Bohrung bzw. Öffnung in einer Wand geringer Dicke,

Fig. 12 den erfindungsgemäßen Verschlußstopfen in Verschlußstellung.

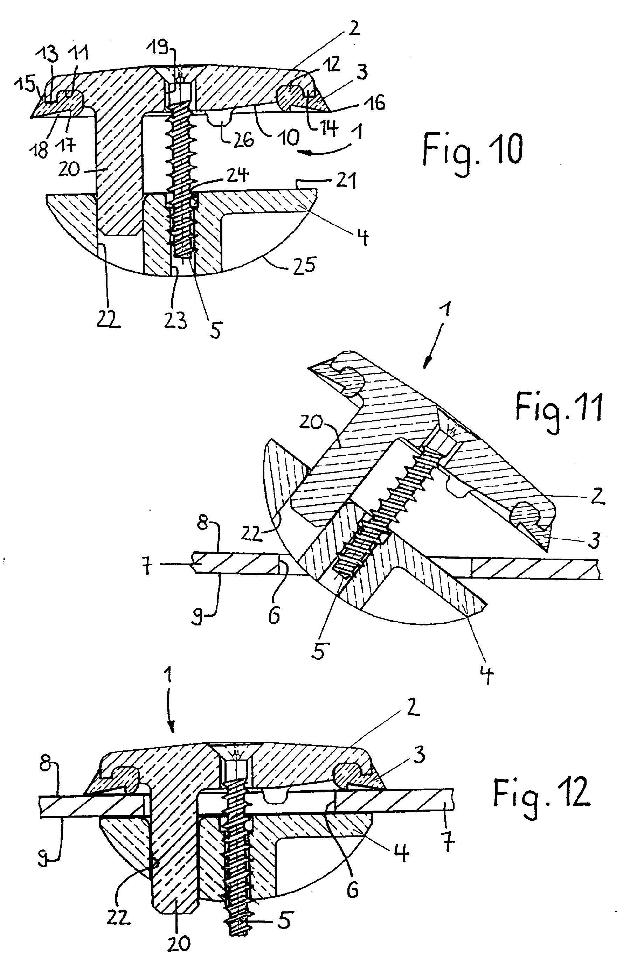

Der erfindungsgemäße Verschlußstopfen ist insgesamt mit 1 bezeichnet und besteht aus vier Einzelteilen, nämlich einer Abdeckplatte 2, einem Dichtungsring 3, einem Konterbügel 4 und einer Spannschraube 5. Mit diesem Verschlußstopfen 1 ist eine Bohrung bzw. Öffnung 6 in einer Wand 7 geringer Dicke wasserdicht zu verschließen. Bei dieser Wand 7 kann es sich um ein Teil einer Fahrzeugkarosserie handeln. Die Bohrung bzw. Öffnung 6 ist nur von einer Seite der Wand 7 her zugänglich, wobei deren zugängliche Seite mit 8 und deren unzugängliche Seite mit 9 bezeichnet ist. Die Abdeckplatte 2 trägt an ihrer Unterseite 10 den in Einbaulage des Verschlußstopfens 1 an der zugänglichen Seite 8 der Wand 7 um die Bohrung bzw. Öffnung zur Anlage kommenden Dichtungsring 3. Hierzu ist in der Abdeckplatte 2 eine umlaufende Aufnahmenut 11 vorgesehen, in welche der aus elastischem Dichtungsmaterial, wie Gummi oder dergleichen, hergestellte Dichtungsring mit einem Ringwulst 12 unter entsprechender Vorspannung eingesetzt wird. Um den Ringwulst 12 verläuft eine Ringnut 13, in welche der äußere Rand 14 der Abdeckplatte 2 eintaucht, und die von einer Außenlippe 15 begrenzt wird, die den äußeren Rand 14 der Abdeckplatte 2 außen umgreift. Hierdurch ist der Dichtungsring 3 sicher an der Abdeckplatte 2 gehalten. Außerdem weist der Dichtungsring 3 auf seiner eigentlichen Dichtungsseite, also unten, eine äußere Dichtlippe 16 und eine hierzu konzentrische innere Dichtlippe 17 auf, zwischen denen sich eine umlaufende, im Querschnitt keilförmige Hinterschneidung 18 erstreckt. Durch diese beiden Dichtlippen 16, 17 ist in Verbindung mit der Hinterschneidung 18 bei eingebautem Verschlußstopfen 1 - siehe Fig. 12 - ein Vordringen von Wasser zur abzudichtenden Bohrung bzw. Öffnung 6 infolge Kapillarwirkung sicher vermeidbar.

Die Abdeckplatte 2 weist ferner eine Durchgangsbohrung 19 zur Hindurchführung der Spannschraube 5 und räumlich neben dieser Durchgangsbohrung 19 an ihrer Unterseite 10 einen senkrecht zur Befestigungsebene vorspringen Verdrehsicherungs- und Fixierungszapfen 20 auf.

Der in Einbaulage des Verschlußstopfens 1 an der unzugänglichen Seite 9 der Wand 7 mit seiner Klemmfläche 21 zur Anlage kommende Konterbügel 4 weist ein den Verdrehsicherungs- und Fixierungszapfen 20 mit Spiel aufnehmendes Durchgangsloch 22 und eine in Zusammenbaulage zur Durchgangsbohrung 19 der Abdeckplatte 2 fluchtende Kernlochbohrung 23 zum selbstgewindeschneidenden Eindrehen der Spannschraube 5 auf. Der Konterbügel 4 ist außerdem so gestaltet, daß der teilemäßig vormontierte Verschlußstopfen 1 bei dann noch gegenüber der Dicke der Wand 7 gegebenen größerem Abstand zwischen Abdeckplatte 2 und Konterbügel 4 - siehe Fig. 10 - mit dem Konterbügel 4 ungehindert schräg durch die Bohrung bzw. Öffnung 6 - wie aus Fig. 11 ersichtlich - zur unzugänglichen Seite 9 der Wand 7 hin in korrekte Einbauposition bringbar ist.

Im einzelnen betrachtet, hat der an der Abdeckplatte 2 vorzugsweise einstückig mit dieser ausgebildete Verdrehsicherungsund Fixierungszapfen 20 einen solchen von der Kreisform abweichenden Querschnitt, daß in Verbindung mit dem formmäßig entsprechend angepaßten Durchgangsloch 22 im Konterbügel 4 bei teilemäßigem Zusammenbau des Verschlußstopfens 1 die Durchgangsbohrung 19 in der Abdeckplatte 2 mit der Kernlochbohrung 23 im Konterbügel 4 in axial fluchtende Anordnung kommt und außerdem dann eine Verdrehung des Konterbügels 4 gegenüber der Abdeckplatte 2 um die Achse des Verdrehsicherungsund Fixierungszapfens 20 verhindert ist. Die im Konterbügel 4 gegebene Kernlochbohrung 23 ist in ihrem Eingangsbereich 24, um das Anschneiden des Gewindes durch die Spannschraube 5 zu erleichtern, auf mindestens Spannschraubenaußendurchmesser zylindrisch oder keglig erweitert. Die am Konterbügel 4 dessen Klemmfläche 21 gegenüberliegende Außenfläche 25 ist, um ein leichtes Durchschieben des Konterbügels 4 bei Montage des Verschlußstopfens 1 an der Wand 7 zu ermöglichen, zumindest annähernd kreisbogenförmig gestaltet. Schließlich sind an der Unterseite 10 der Abdeckplatte 2 auch noch wenigstens zwei Fixierzapfen 26, 27 vorgesehen, die über die Anlageebene des Dichtungsringes 3 geringfügig hinausragen und derart räumlich versetzt angeordnet sind, daß sie zusammen mit dem Verdrehsicherungs- und Fixierungszapfen 20 bei Einsetzen des Verschlußstopfens 1 in die Bohrung bzw. Öffnung 6 für eine zumindest annähernd koaxiale Ausrichtung der Abdeckplatte 2 in Bezug auf letztere sorgen. Außerdem sind diese beiden Fixierzapfen 26, 27 soweit voneinander beabstandet, daß der Konterbügel 4 gerade zwischen die hierdurch gegebene Lücke hineinpaßt, was den Vorteil hat, daß der Konterbügel 4 im unbenutzten Zustand für eine möglichst kompakte Lagerhaltung dicht an die Unterseite 10 der Abdeckplatte 2 herangerückt und außerdem der Verschlußstopfen 1 auch zum Verschließen von Bohrungen bzw. Öffnungen 6 in Blechen geringer Wanddicke verwendet werden kann.

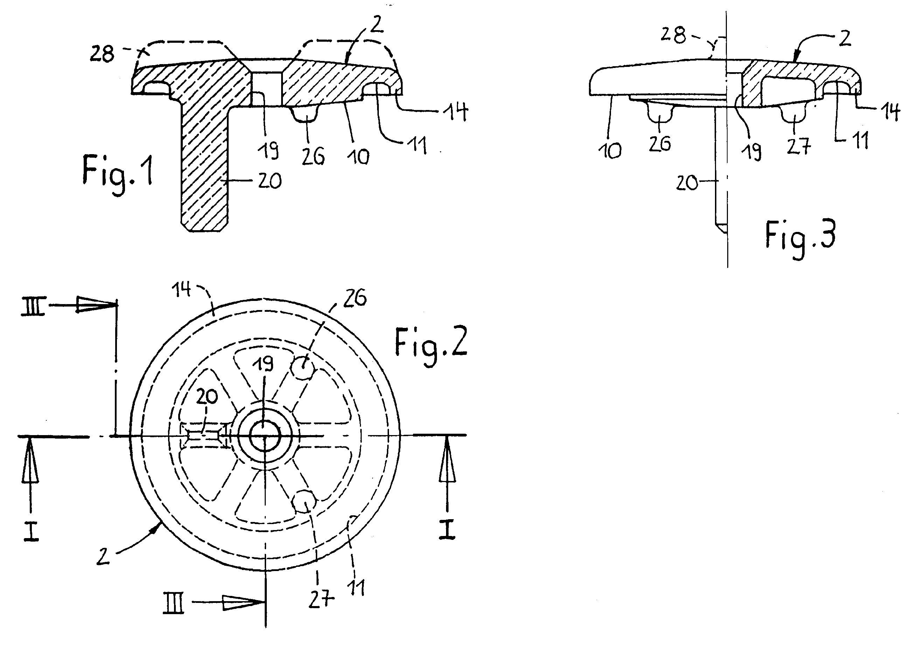

Für verschiedene Anwendungsfälle kann es sich auch als zweckmäßig erweisen, an der Oberseite der Abdeckplatte 2 eine Montagehilfe 28 beispielsweise in Form einer Rippe, eines Flügels, einer Nabe oder dergleichen vorzusehen, um die Montage des Verschlußstopfens 1 und insbesondere das Fixieren beim Einschrauben der Spannschraube 5 zu erleichtern. Diese Montagehilfe 28 ist nur in Fig. 1 und 3 gestrichelt eingetragen.

Die Abdeckplatte 2 und der Konterbügel 4 sind jeweils einstückig aus geeignetem Kunststoffmaterial, beispielsweise Polyacetal, im Spritzgußverfahren hergestellt.

Aus Fig. 10 ist die vormontierte Anordnung und Lage der Einzelteile des Verschlußstopfens 1 untereinander ersichtlich. Bei diesem teilemäßigen Zusammenbau wird zunächst der Dichtungsring 3 unter entsprechender Vorspannung an der Abdeckplatte 2 montiert. Dann wird die Abdeckplatte 2 mit ihrem Verdrehsicherungs- und Fixierungszapfen 20 in das zugehörige Durchgangsloch 22 des Konterbügels 4 eingeführt. Aufgrund des diesbezüglichen Formschlusses ist die Durchgangsbohrung 19 in der Abdeckplatte 2 fluchtend zur Kernlochbohrung 23 im Konterbügel 4 angeordnet, wodurch die Spannschraube 5 nach Hindurchführung durch die Durchgangsbohrung 19 zielsicher in die Kernlochbohrung 23 einführbar ist. Ein entsprechendes Einfädeln wird auch durch dessen Erweiterung 24 erleichtert. Nach geringfügigem Eindrehen der Spannschraube 25 in die Kernlochbohrung 23 ist der Konterbügel 4 unverlierbar an der Abdeckplatte 2 montiert. Dabei ist in dieser vormontierten Stellung der Konterbügel 4 mit seiner Klemmfläche 21 noch um ein Maß von der Unterseite der Abdeckplatte 2 bzw. der Dichtebene des Dichtungsringes 3 entfernt, welches beispielsweise das drei- bis fünffache der Dicke der Wand 7 beträgt.

Aus Fig. 11 ist eine Stellung des wie vorbeschrieben teilemäßig vormontierten Verschlußstopfens 1 in Bezug auf die zu verschließende Bohrung bzw. Öffnung 6 und die Wand 7 ersichtlich. Bei diesem Endmontagevorgang wird der Verschlußstopfen 1 von Hand leicht schräg mit dem Konterbügel 4 durch die Bohrung bzw. Öffnung 6 hindurch zur unzugänglichen Seite 9 der Wand 7 hindurchgeführt, dann nach vollständigem Durchtritt des Konterbügels 4 mittels der Fixierzapfen 26, 27 und des Verdrehsicherungs- und Fixierungszapfens 20 in Bezug auf die Öffnung bzw. Bohrung 6 zentriert, wobei während dieses Vorgangs der Dichtungsring 3 mit seinen Dichtlippen 16 und 17 an der zugänglichen Seite 8 der Wand zur Auflage kommt. Zuletzt wird durch weiteres Eindrehen der Spannschraube 5 in die Kernlochbohrung 23 der Konterbügel 4 axial zur unzugänglichen Seite 9 der Wand 7 hingezogen, so lange, bis dieser vollständig an letzterer zu Anlage kommt und der Dichtungsring 3 in Axialrichtung etwas vorgespannt wird. Die am Ende dieses Montagevorganges gegebene Lage des Verschlußstopfens 1 an der Wand 7 in Bezug auf die Öffnung bzw. Bohrung 6 ist aus Fig. 12 ersichtlich. Nach dieser Montage des Verschlußstopfens 1 ist die Bohrung bzw. Öffnung 6 wasserdicht nach außen hin abgeschlossen.

Aufgrund seiner erfindungsgemäßen Konstruktion ist es ohne weiteres und jederzeit möglich, den Verschlußstopfen 1 wieder von seiner aus Fig. 12 ersichtlichen Einbaulage zu entfernen, wobei hinsichtlich der erforderlichen Handgriffe lediglich in umgekehrter Reihenfolge wie bei der Montage vorgegangen werden muß.

## Patentansprüche

1. Von Hand montier- und demontierbarer, wasserdichter Verschluß für eine nur von einer Seite her zugängliche Bohrung bzw. Öffnung in einer Wand, insbesondere Karosserieteil, geringer Dicke, gekennzeichnet durch einen vierteiligen Verschlußstopfen (1), bestehend aus Abdeckkappe (2), Dichtungsring (3), Konterbügel (4) und Spannschraube (5), wobei
   - die Abdeckplatte (2) unterseitig den in Einbaulage des Verschlußstopfens (1) an der zugänglichen Seite (8) der Wand (7) um die Bohrung bzw. Öffnung (6) zur Anlage kommenden Dichtungsring (3) trägt, außerdem eine Durchgangsbohrung (19) für Hindurchführung der Spannschraube (5) und neben dieser unterseitig einen senkrecht zur Befestigungsebene vorspringenden Verdrehsicherungs- und Fixierungszapfen (20) aufweist, und
   - der in Einbaulage des Verschlußstopfens (1) an der unzugänglichen Seite (9) der Wand (7) zur Anlage kommende Konterbügel (4) ein den Verdrehsicherungs- und Fixierungszapfen (20) mit Spiel aufnehmendes Durchgangsloch (22) und eine in Zusammenbaulage zur Durchgangsbohrung (19) der Abdeckplatte (2) fluchtende Kernlochbohrung (23) zum selbstgewindeschneidenden Eindrehen der Spannschraube (5) aufweist und außerdem so gestaltet ist, daß der teilemäßig vormontierte Verschlußstopfen (1) bei dann gegenüber der Dicke der Wand (7) noch wesentlich größerem Abstand zwischen Abdeckplatte (2) und Konterbügel (4) mit letzterem ungehindert schräg durch die Bohrung bzw. Öffnung (6) zur unzugänglichen Seite (9) der Wand (7) hin in korrekte Einbauposition bringbar ist.

2. Verschlußstopfen nach Anspruch 1, dadurch gekennzeichnet, daß die Abdeckplatte (2) und der Konterbügel (4) jeweils einstückig aus Kunststoff, wie Polyacetal, im Spritzgußverfahren hergestellt sind.

3. Verschlußstopfen nach Anspruch 1, dadurch gekennzeichnet, daß der aus elastischem Material, wie Gummi oder dergleichen hergestellte Dichtungsring (3) mit einem Ringwulst (12) in einer unterseitigen Aufnahmenut (11) an der Abdeckplatte (2) aufgenommen ist, außerdem auch den äußeren Rand (14) der Abdeckplatte (2) in einer Nut (13) aufnimmt und mit einer Außenlippe (15) umgreift sowie unten eine äußere (16) und innere Dichtlippe (17) aufweist, zwischen denen sich eine umlaufende, im Querschnitt keilförmige Hinterschneidung (18) erstreckt.

4. Verschlußstopfen nach Anspruch 1, dadurch gekennzeichnet, daß der an der Abdeckplatte (2) einstückig mit dieser ausgebildete Verdrehsicherungs- und Fixierungszapfen (20) einen solchen von Kreisform abweichenden Querschnitt hat, daß in Verbindung mit dem formmäßig angepaßten Durchgangsloch (22) im Konterbügel (4) bei teilemäßigem Zusammenbau des Verschlußstopfens (1) die Durchgangsbohrung (19) in der Abdeckplatte (2) mit der Kernlochbohrung (23) im Konterbügel (4) in axial fluchtende Anordnung kommt und außerdem dann eine Verdrehung des Konterbügels (4) gegenüber der Abdeckplatte (2) um die Achse des Zapfens (20) verhindert ist.

5. Verschlußstopfen nach Anspruch 1, dadurch gekennzeichnet, daß an der Unterseite (10) der Abdeckplatte (2) auch zwei Fixierzapfen (26, 27) vorgesehen sind, die über die Anlageebene des Dichtungsringes (3) geringfügig hinausragen und zusammen mit dem Verdrehsicherungs- und Fixierungszapfen (20) bei Einsetzen des Verschlußstopfens (1) in die Bohrung bzw. Öffnung (6) für eine zumindest annähernd koaxiale Ausrichtung der Abdeckplatte (2) zu letzterer sorgen.

6. Verschlußstopfen nach Anspruch 1, dadurch gekennzeichnet, daß die Kernlochbohrung (23) im Konterbügel (4), um das Anschneiden des Gewindes durch die Spannschraube (5) zu erleichtern, im Eingangsbereich (24) auf mindestens Spannschraubenaußendurchmesser zylindrisch oder keglig erweitert ist.

7. Verschlußstopfen nach Anspruch 1, dadurch gekennzeichnet, daß die der Klemmfläche (21) gegenüberliegende Außenfläche (25) des Konterbügels (4), zwecks Erleichterung des Durchschiebens durch die Bohrung bzw. Öffnung (6) in der Wand (7), zumindest annähernd kreisbogenförmig gestaltet ist.

8. Verschlußstopfen nach Anspruch 1, gekennzeichnet durch seine Verwendung zum Verschließen einer serienmäßig in einer Kraftfahrzeugkarosserie vorhandenen, aber nicht benutzten Antennendurchführungsbohrung.

9. Verschlußstopfen nach Anspruch 1, dadurch gekennzeichnet, daß er für verschiedene Anwendungsfälle an der Oberseite der Abdeckplatte (2) eine Montagehilfe (28) beispielsweise in Form einer Rippe, eines Flügels, einer Nabe oder dergleichen aufweist, um das Fixieren und Halten beim Einschrauben der Spannschraube (5) zu erleichtern.

## Claims

1. Manually installable and removable waterproof closure for a bore or opening in a thin wall, in particular in a piece of bodywork, which bore or opening is accessible from one side only, said closure being characterised by a four-part plug (1) consisting of a cap (2), a seal (3), a mating piece (4) and a tensioning screw (5),
where
- the cap (2) bears on its underside the seal (3) which is in contact with the accessible side (8) of the wall (7) around the bore or opening (6) when the plug (1) is in installation position, and also has a through hole (19) for introduction of the tensioning screw (5) and, adjacent to this on the underside, a projecting locating and fixing peg (20) perpendicular to the plane of attachment, and
- the mating piece (4), which is in contact with the inaccessible side (9) of the wall (7) when the plug (1) is in installation position, has a through hole (22) to take the peg (20) with play and a core hole bore (23), which is aligned with the through bore (19) in the cap (2) when the closure is assembled and in which the tensioning screw (5) cuts its own thread as it is screwed in, said mating piece also being so designed that it can, when the plug (1) is pre-assembled from its component parts, the distance between the cap (2) and the mating piece (4) then being considerably greater than the thickness of the wall, be inserted obliquely and without obstruction through the bore or opening (6) to the inaccessible side (9) of the wall (7) and the plug (1) thus correctly positioned for installation.

2. Plug as described under Claim 1, characterised by the fact that the cap (2) and the mating piece (4) are each manufactured by the injection moulding process in one piece from plastic, such as polyacetal.

3. Plug as described under Claim 1, characterised by the fact that the seal (3) made of elastic material such as rubber or the like is held in a groove (11) on the underside of the cap (3) by an annular bead (12), holds the outer edge (14) of the cap (2) in a groove (13) and fits around said cap by means of an external lip (15) and has on the underside an outer (16) and an inner sealing lip (17), between which is a all-round undercut (18) of wedge-shaped cross-section.

4. Plug as described under Claim 1, characterised by the fact that the locating and fixing peg (20) on the cap (2) and formed as one piece with the latter has a cross-section which deviates from a circular form in such a way that, in connection with the matching through hole (22) in the mating piece (4) the through bore (19) in the cap (2) comes into axial alignment with the core hole bore (23) in the mating piece (4) when the plug (1) is assembled from its components, and that turning of the mating piece (4) in relation to the cap (2) about the axis of the peg (20) is then prevented.

5. Plug as described under Claim 1, characterised by the fact that on the underside (10) of the cap (2) there are also two locating lugs (26, 27) which project slightly from the contact plane of the seal (3) and together with the fixing and locating peg (20) ensure when the plug (1) is inserted in the bore or opening (6) that the cap (2) is at least approximately coaxially aligned with said bore or opening.

6. Plug as described under Claim 1, characterised by the fact that the core hole bore (23) in the mating piece (4) has, to facilitate the cutting of the thread by the tensioning screw (5), a mouth (24) widened in cylindrical or tapered fashion so as to be at least equal in diameter to the external diameter of the tensioning screw.

7. Plug as described under Claim 1, characterised by the fact that the outer face (25) opposite to the clamping face (21) of the mating piece (4) has, to enable the latter to be pushed more easily through the bore or opening (6) in the wall (7), at least approximately the form of a circular arc.

8. Plug as described under Claim 1, characterised by its use in closing up an antenna fitting bore produced as a standard feature in a piece of vehicle bodywork but not used.

9. Plug as described under Claim 1, characterised by the fact that it has, for various applications, an assembly aid (28) on the upper side of the cap (2), for example in the form of a rib, a wing, a lug or the like, in order to make it easier to fix and hold said cap when the tensioning screw (5) is screwed in.

## Revendications

1°) Obturateur étanche à l'eau, montable et démontable à la main destiné à boucher un trou ou une ouverture accessible d'un seul côté dans une paroi, en particulier un élément de carrosserie, de faible épaisseur, caractérisé en ce qu'il est constitué par un bouchon obturateur (1) en quatre parties, à savoir un capot de couverture (2), un anneau d'étanchéité (3), un contre-écrou (4) et une vis de tension (5) présentant les particularités suivantes :
- le capot de couverture (2) porte sur sa face inférieure l'anneau d'étanchéité (3) qui vient s'appuyer sur la face accessible (8) de la paroi, en position montée du bouchon obturateur (1), il présente aussi un alésage (19) pour le passage de la vis de tension (5) et près de celle-ci, sur la face inférieure, dépassant perpendiculairement le plan de fixation, un ergot de fixation et d'antirotation (20),
- le contre-écrou (4) qui, en position montée du bouchon obturateur (1) vient en appui sur la face inaccessible (9) de la paroi (7) présente un trou de passage (22) accueillant avec du jeu l'ergot (20) de fixation et d'antirotation (20) ainsi qu'un alésage central (23) qui, en position d'assemblage, est aligné avec l'alésage (19) du capot de couverture (2) pour permettre l'engagement de la vis de tension (5) autotaraudeuse ; par ailleurs le contre-écrou est conçu de manière que le bouchon obturateur, lorsqu'il est partiellement en situation de prémontage, pour laquelle il existe encore entre le capot de couverture (2) et le contre-écrou (4) un intervalle relativement important par rapport à l'épaisseur de la paroi (7) peut être amené par traversée en oblique du trou ou de l'orifice (6), sans que la barrette fasse obstacle, jusqu'à sa position correcte de montage sur la face inaccessible (9) de la paroi (7).

2°) Bouchon obturateur selon la revendication 1, caractérisé en ce que le capot de couverture (2) et le contre-écrou (4) sont réalisés chacun d'une seule pièce, en moulage par injection de matière plastique, tel que du polyacétal.

3°) Bouchon obturateur selon la revendication 1, caractérisé en ce que l'anneau d'étanchéité (3), réalisé en matériau élastique tel que du caoutchouc ou matériau semblable, est logé par l'intermédiaire d'un bourrelet annulaire (12) dans une rainure (11) de la face inférieure du capot de couverture (2), tandis qu'il reçoit lui-même dans une rainure (13) le bord externe (14) du capot de couverture (2) qu'il entoure d'une lèvre extérieure (15) complétée à la partie inférieure par des lèvres externe (16) et interne (17) d'étanchéité, entre lesquelles s'étend une contre-découpe circulaire (18) ayant une section en forme de coin.

4°) Bouchon obturateur selon la revendication 1, caractérisé en ce que l'ergot (20) de fixation et d'antirotation, monobloc avec le capot de couverture, a une section non circulaire telle qu'en venant coopérer avec l'alésage (22) de forme correspondante, traversant le contre-écrou (4), lors de l'assemblage partiel du bouchon obturateur (1), l'alésage (19) du capot de couverture (2) vient s'aligner avec l'alésage central (23) du contre-écrou (4), ce qui empêche par ailleurs un déplacement par rotation autour de l'axe de l'ergot (20) du contre-écrou (4) par rapport au capot de couverture (2).

5°) Bouchon obturateur selon la revendication 1, caractérisé en ce que la face inférieure (10) du capot de couverture présente aussi deux ergots de fixation (26, 27) dépassant légèrement le plan d'application de l'anneau d'étanchéité (3), ces ergots ainsi que l'ergot de fixation et d'antirotation (20) ayant pour rôle d'assurer une position sensiblement coaxiale du capot de couverture (2) par rapport à l'ouverture (6), lorsqu'on introduit le bouchon obturateur (1) dans le trou ou l'ouverture (6)

6°) Bouchon obturateur selon la revendication 1, caractérisé en ce que l'alésage central (23) du contre-écrou (4) afin de faciliter son autotaraudage par la vis de tension (5), est élargi à son entrée (24), en cylindre ou en cône, jusqu'à un diamètre au moins égal à celui de la vis.

7°) Bouchon obturateur selon la revendication 1, caractérisé en ce que la face externe (25) du contre-écrou (4) opposée à la face de serrage (21) a une forme sensiblement en arc de cercle, pour faciliter le passage à travers le trou ou l'ouverture (6) de la paroi (7).

8°) Bouchon obturateur selon la revendication 1, caractérisé en ce qu'il est utilisé pour obturer un passage d'ouverture pour antenne non utilisé, prévu en série dans la carrosserie d'une automobile.

9°) Bouchon obturateur selon la revendication 1, caractérisé en ce que, pour de nombreuses utilisations, il est muni sur la face supérieure du capot de couverture (2) d'un auxiliaire de montage (28), par exemple en forme de nervure, d'ailette, de moyeu ou organe analogue, facilitant le positionnement et le maintien lors du serrage de la vis de tension (5).

Fig.1

Fig.3

Fig.2

EP 0 365 808 B1

Fig.4

Fig.6

Fig.5

Fig.7

Fig.8

Fig.9

Fig. 10

Fig. 11

Fig. 12